# EUROPÄISCHE PATENTANMELDUNG

(11) **EP 1 418 088 A2**
(43) Veröffentlichungstag der Anmeldung: **12.05.2004**
(21) Anmeldenummer: 03025487.4
(22) Anmeldetag: 06.11.2003
(51) Int. Cl.: B60Q 3/02, F21V 21/32, F21V 21/29

(54) **Innenleseleuchte**

(30) Priorität: 06.11.2002 DE 20217128 U
(71) Anmelder: FER Fahrzeugelektrik GmbH, 99819 Eisenach (DE)
(72) Erfinder: Marschall, Hartmut, 99819 Neuenhof (DE); Tietze, Martin, 99817 Eisenach (DE)
(74) Vertreter: Strasser, Wolfgang, Dipl.-Phys.

(57) **Zusammenfassung**

Eine Innenleseleuchte, insbesondere zur Verwendung in Kraftfahrzeugen, umfaßt ein verschwenkbares Gehäuse (11) , eine in dem Gehäuse (11) angeordnete Lichtquelle und ein optisch wirksames Element zur Bündelung des von der Lichtquelle abgestrahlten Lichts. Zu Erzielung einer geringeren Einbautiefe ist vorgesehen, daß die Lichtquelle von einer Leuchtdiode (20) gebildet wird und daß das optisch wirksame Element von einem im wesentlichen stumpfkegeligen Körper (24) aus transparentem Material gebildet wird, in dessen einen geringeren Durchmesser aufweisenden Ende eine Vertiefung (25) ausgebildet ist, in welche die Leuchtdiode (20) hineinragt.

## Beschreibung

Die Erfindung betrifft eine Innenleseleuchte, insbesondere zur Verwendung in Kraftfahrzeugen, der im Oberbegriff von Anspruch 1 niedergelegten Art.

Solche Innenleseleuchten sind beispielsweise aus der deutschen Gebrauchsmusterschrift 200 00 875 bekannt. Sie basieren auf dem Prinzip, daß das von einer Lichtquelle, im allgemeinen einer Glühlampe, abgegebene Licht mit Hilfe eines Reflektors gebündelt und durch eine Lichtscheibe abgestrahlt wird, die eine optisch wirksame Struktur besitzt, mit deren Hilfe die jeweils gewünschte Lichtverteilung im Innenraum erzielt werden soll. Dabei ist es häufig wünschenswert, die Richtung der Lichtabstrahlung zu verändern.

Zu diesem Zweck sieht die genannte Gebrauchsmusterschrift vor, das Gehäuse der Innenleseleuchte mit einem Einbaurahmen so zu verbinden, daß es nach dem Einbau verschwenkt werden kann, um die zentrale Achse des vom Reflektor gebündelten Lichts wahlweise ausrichten zu können, wobei eine koaxial zum Reflektor am Gehäuse montierte Linse das abgestrahlte Licht zusätzlich in einen vorgegebenen Raumbereich bündelt.

Diese bekannte Anordnung besitzt eine relativ große Einbautiefe, umfaßt mehrere optisch aktive Einzelteile und entwickelt sehr viel Wärme.

Demgegenüber liegt der Erfindung die Aufgabe zugrunde, eine Innenleseleuchte der eingangs beschriebenen Art so weiterzubilden, daß sie eine geringere Einbautiefe besitzt, weniger optisch aktive Einzelteile aufweist und weniger Wärme entwickelt.

Zur Lösung dieser Aufgabe sieht die Erfindung die im Anspruch 1 niedergelegten Merkmale vor.

Dadurch, daß ein stumpfkegeliger Körper aus transparentem Material, beispielsweise Kunststoff oder Glas verwendet wird, in dessen im Scheitelbereich vorgesehene Vertiefung die Leuchtdiode so weit hineinragt, daß das gesamte von ihr abgegebene Licht in diesen stumpfkegeligen Körper eingekoppelt und durch die mit ihm einstückig verbundene Sammellinse sowie durch Totalreflexion an seiner Mantelfläche gebündelt und parallelisiert wird, kann auf einen zusätzlichen Reflektor vollständig verzichtet werden. Bei herkömmlichen Leuchten muß ein solcher Reflektor die Lichtquelle immer von hinten her so umgeben, daß ihre Licht emittierenden Bereiche in etwa in seinem Brennpunkt liegen. Dies bedingt eine zusätzliche Einbautiefe, die bei einer erfindungsgemäßen Innenleseleuchte durch den Wegfall des Reflektors nicht benötigt wird. Im übrigen ist die durch eine Leuchtdiode entwickelte Wärme wesentlich geringer als bei einer Glühlampe.

Das Gehäuseende der erfindungsgemäßen Innenleseleuchte kann in vorteilhafter Weise entweder mit einem Kugelgelenk, das in einer fest montierten Einbauhalterung schwenkbar gelagert ist, oder mit dem freien Ende einer verbiegbaren, stielförmigen Halterung, deren anderes Ende fest montiert ist, verbunden sein, so daß die Innenleseleuchte durch Verschwenken oder Verbiegen der stielförmigen Halterung in der jeweils gewünschten Weise ausgerichtet werden kann.

Diese und andere vorteilhafter Ausgestaltungen einer erfindungsgemäßen Innenleseleuchte sind in den Unteransprüchen niedergelegt.

Die Erfindung wird im folgenden anhand von Ausführungsbeispielen unter Bezugnahme auf die Zeichnung beschrieben; in dieser zeigen:
- Figur 1: eine Schnittansicht durch eine erfindungsgemäß in einer Einbauhalterung schwenkbar gelagerte Innenleseleuchte,
- Figur 2: eine Schnittansicht durch einen Einbauträger mit einer verbiegbaren, stielförmigen Halterung, an deren freien Ende erfindungsgemäß eine Innenleseleuchte befestigt ist und sich in einer Stellung befindet, in der sie sich an die Kontur des Einbauträgers anschmiegt,
- Figur 3: eine Draufsicht von unten auf die Anordnung aus Figur 2 und
- Figur 4: eine der Figur 2 entsprechende Ansicht, wobei die verbiegbare, stielförmige Halterung so gebogen ist, daß die Innenleseleuchte vom Einbauträger weg gerichtet ist.

Bei der folgenden Figurenbeschreibung beziehen sich die Begriffe "oben" und "unten" lediglich auf die jeweilige Figur ohne daß damit eine Einschränkung hinsichtlich der tatsächlichen Einbaulage verbunden wäre. Die in den Figuren als horizontal verlaufend dargestellten Innenverkleidungen können im konkreten Anwendungsfall ebenso vertikal oder unter einem beliebigen Winkel gegen die Horizontale oder Vertikale geneigt verlaufen.

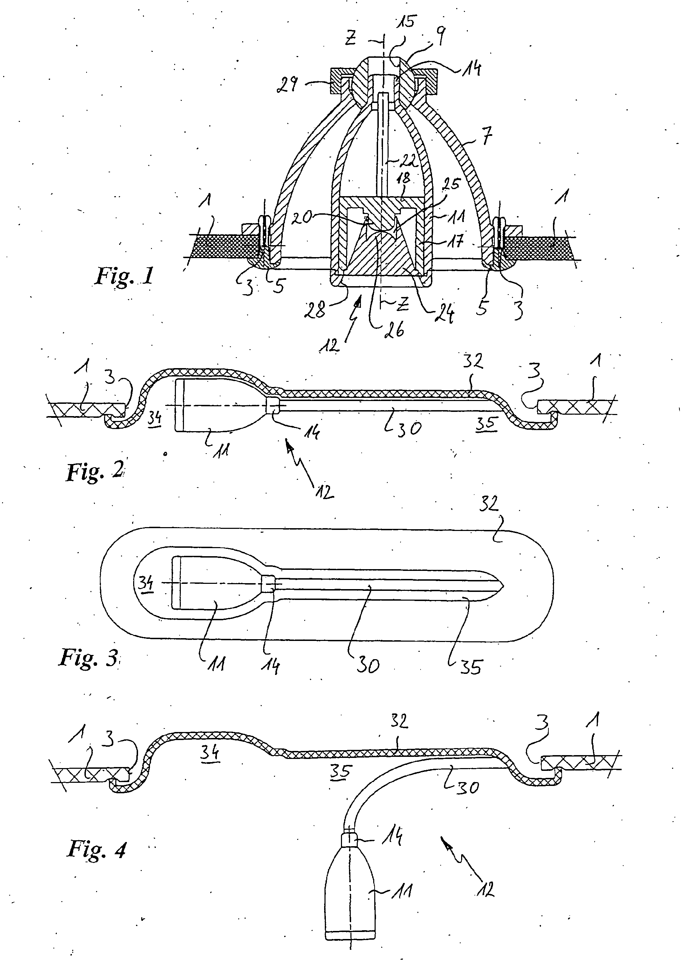

In Figur 1 ist ein Ausschnitt aus einer Innenverkleidung 1, beispielsweise der Dachhimmeloder Seitenwand-Verkleidung eines Kraftfahrzeugs wiedergegeben, die eine Einbauöffnung 3 aufweist, in der mit Hilfe einer Befestigungsvorrichtung 5 eine glockenförmige Einbauhalterung 7 so montiert ist, daß sich die Ebene ihrer weiten Öffnung in etwa parallel zur Oberfläche der Innenverkleidung 1 erstreckt. An ihrem oberen, verjüngten Ende trägt die Einbauhalterung 7 eine Gelenkkugel 9, die so gelagert ist, daß das in ihr mit seinem oberen Ende fest montierte Gehäuse 11 der erfindungsgemäßen Innenleseleuchte 12 um seine Längsachse Z in einem durch die Außenabmessungen des Gehäuses 11 und die Innenabmessungen der Einbauhalterung 7 begrenzten Raumwinkelbereich verschwenkt werden kann.

Das Gehäuse 11 ist in seinem unteren Teil zylindrisch und verjüngt sich nach oben hin zu einem kurzen Stutzen 14, der in eine durchgehende Bohrung 15 der Gelenkkugel 9 eingepreßt ist. In das untere zylindrische Ende des Gehäuses 11 ist ein hohlzylindrischer Leuchtdioden-Träger 17 eingesetzt, der auf seiner innenliegenden Stirnwand 18 die als Lichtquelle der erfindungsgemäßen Innenleseleuchte dienende Leuchtdiode 20 trägt. An der Stirnwand 18 befindet sich die (nicht dargestellte) Verdrahtungsplatine für die Anschlüsse der Leuchtdiode 20, die über ein Anschlußkabel 22 mit Strom versorgt wird, daß sich durch das Gehäuse 11, den Stutzen 14 und die Bohrung 15 der Gelenkkugel 9 nach hinten erstreckt und mit einer nicht dargestellten Ansteuerschaltung und Energiequelle verbunden ist.

In den nach unten offenen Leuchtdioden-Träger 17 ist ein stumpfkegeliger Körper 24 aus einem transparenten Material, beispielsweise Kunststoff oder Glas eingesetzt, der an seinem oberen, verjüngten Ende eine in etwa zylindrische, zu seiner Längsachse koaxial ausgerichtete Vertiefung 25 aufweist, in welche das Gehäuse der Leuchtdiode 20 so weit hineinragt, daß praktisch das gesamte von der Leuchtdiode 20 abgestrahlte Licht entweder über die Seitenwände der zylindrischer Vertiefung 25 oder durch eine an deren Boden vorgesehene und mit dem stumpfkegeligen Körper 24 einstückig ausgebildete Sammellinse 26 in dem stumpfkegeligen Körper 24 eintritt.

Der Scheitelwinkel des stumpfkegeligen Körper 24 ist so gewählt, daß alles Licht, das von ihnen her auf seine Kegelmantelfläche auftritt, durch Totalreflexion zur Achse Z hin gebündelt wird, so das aus der in Figur 1 unten liegenden Lichtaustrittsöffnung 28 ein weitgehend parallelisiertes Lichtbündel austritt, das vom Benutzer durch Verschwenken des Gehäuses 11 auf den zu beleuchtenden Bereich gerichtet werden kann.

Das Gehäuse 11, der Träger 17 und der stumpfkegeligen Körper 24 können auf irgend eine herkömmlich die Weise beispielsweise durch Verkleben, durch Einpressen im Paßsitz oder dergleichen miteinander verbunden sein. Gleiches gilt auch für den Stutzen 14 des Gehäuses 11 und die Gelenkkugel 9, die durch einen Montagering 29 an oberen Ende der Einbauhalterung 7 beweglich befestigt ist.

Bei der in den Figuren 2, 3 und 4 dargestellten Ausführungsform ist das Gehäuse 11 der erfindungsgemäßen Innenleseleuchte 12 nicht geschnitten dargestellt. Sein innerer Aufbau ist aber mit dem der in Figur 1 gezeigten Ausführungsform identisch. Ein wesentlicher Unterschied besteht darin, daß hier der Stutzen 14 nicht in eine Gelenkkugel eingepreßt ist, sondern fest mit dem freien Ende einer verbiegbaren, stielförmigen Halterung 30 verbunden ist, die beispielsweise von einem aus Metall oder Kunststoff bestehenden Spiralschlauch gebildet sein kann, in dessen Inneren wieder die (nicht weiter dargestellten) Stromversorgungsanschlüsse für die Leuchtdiode 20 verlaufen.

Das andere Ende der verbiegbaren, stielförmigen Halterung 30 ist an einem Einbauträger 32 befestigt, der in die Einbauöffnung drei einer Innenverkleidung 1 eingesetzt und durch nicht näher gezeigte Mittel gehalten ist.

Wie man insbesondere den Schnittansichten der Figuren 2 und 4 entnimmt, setzt der Einbauträger 32 im wesentlichen den Verlauf der Innenverkleidung 1 fort, besitzt jedoch zwei Vertiefungen 34, 35 die ineinander übergehen und an die Form des Gehäuses 11 beziehungsweise der verbiegbaren, stielförmigen Halterung 30 so angepaßt sind, daß die erfindungsgemäße Innenleseleuchte 20 in ihnen aufgenommen werden kann, wie dies die Figuren 2 und 3 zeigen.

Um das durch die Lichtaustrittsöffnung 28 austretende Lichtbündel in eine gewünschte Richtung zu lenken, kann der Benutzer die stielförmige Halterung 30 in der jeweils erforderlichen Weise biegen, wie dies beispielsweise in Figur 4 dargestellt ist.

## Patentansprüche

1. Innenleseleuchte, insbesondere zur Verwendung in Kraftfahrzeugen, mit einem verschwenkbaren Gehäuse (11) , einer in dem Gehäuse (11) angeordneten Lichtquelle und einem optisch wirksamen Element zur Bündelung des von der Lichtquelle abgestrahlten Lichts, **dadurch gekennzeichnet, daß** die Lichtquelle von einer Leuchtdiode (20) gebildet wird und daß das optisch wirksame Element von einem im wesentlichen stumpfkegeligen Körper (24) aus transparentem Material gebildet wird, in dessen einen geringeren Durchmesser aufweisenden Ende eine Vertiefung (25) ausgebildet ist, in welche die Leuchtdiode (20) hineinragt.

2. Innenleseleuchte nach Anspruch 1, **dadurch gekennzeichnet, daß** an der der Leuchtdiode (20) gegenüberliegenden Bodenseite der Vertiefung (25) ein Sammellinsenelement (26) vorgesehen ist.

3. Innenleseleuchte nach Anspruch 2, **dadurch gekennzeichnet, daß** das Sammellinsenelement (26) mit dem stumpfkegeligen Körper (24) einstückig ausgebildet ist.

4. Innenleseleuchte nach einem der vorhergehenden Ansprüche, **dadurch gekennzeichnet, daß** der Öffnungswinkel des stumpfkegeligen Körpers (24) so gewählt ist, daß die Anteile des in ihn eingekoppelten Lichts der Leuchtdiode (20), die von innen her auf seine Kegelmantelfläche treffen, durch Totalreflexion zur Kegelachse (Z) hin gebündelt werden.

5. Innenleseleuchte nach einem der vorhergehenden Ansprüche, **dadurch gekennzeichnet, daß** das Gehäuse (11) im wesentlichen die Form eines schlanken Zylinders mit abgerundetem hinteren Ende besitzt, an dessen vorderem Stirnende sich die Lichtaustrittsöffnung (28) befindet.

6. Innenleseleuchte nach einem der vorhergehenden Ansprüche, **dadurch gekennzeichnet, daß** das Gehäuse (11) an seinem der Lichtaustrittsöffnung (28) gegenüberliegenden Ende mit Hilfe eines Kugelgelenks (9) in einer Einbauhalterung (7) schwenkbar gelagert ist.

7. Innenleseleuchte nach einem der Ansprüche 1 bis 5, **dadurch gekennzeichnet, daß** das Gehäuse (11) an dem freien Ende einer verbiegbaren, stielförmigen Halterung (30) montiert ist, die an ihrem anderen Ende mit einem Einbauträger (32) fest verbunden ist.

8. Innenleseleuchte nach Anspruch 7, **dadurch gekennzeichnet, daß** der Einbauträger (32) im wesentlichen der Kontur der ihn tragenden Innenwand (1) folgt, gegenüber dieser aber eine Vertiefung (34) aufweist, die das Gehäuse (11) der Innenleseleuchte (12) aufnehmen kann, wenn die verbiegbare, stielförmige Halterung (30) so gebogen ist, daß sie sich an die Kontur des Einbauträgers (32) anschmiegt.

9. Innenleseleuchte nach Anspruch 8, **dadurch gekennzeichnet, daß** die Vertiefung (34) eine solche Tiefe besitzt, daß das in sie eingefügte Gehäuse (11) nicht über den Einbauträger (32) nach außen vorsteht.

10. Innenleseleuchte nach Anspruch 7 oder 8, **dadurch gekennzeichnet, daß** sich die zur Aufnahme des Gehäuses (11) dienende Vertiefung (34) in einer weiteren Vertiefung (35) fortsetzt, die zur Aufnahme der verbiegbaren, stielförmigen Halterung (30) dient, wenn diese so gebogen ist, daß sie sich an die Kontur des Einbauträgers (32) anschmiegt.

11. Innenleseleuchte nach einem der Ansprüche 7 bis 10, **dadurch gekennzeichnet, daß** die verbiegbare, stielförmige Halterung (30) einen durchgehenden Innenhohlraum umschließt, der zur Führung der Stromversorgungsanschlüsse der Innenleseleuchte (12) dient.

12. Innenleseleuchte nach Anspruch 11, **dadurch gekennzeichnet, daß** die verbiegbare, stielförmige Halterung (30) von einem Spiralschlauch gebildet wird.
